Europäisches Patentamt

European Patent Office

Office européen des brevets

(19)

(11) Publication number : **0 458 358 B1**

(12) **EUROPEAN PATENT SPECIFICATION**

(45) Date of publication of patent specification :
04.05.94 Bulletin 94/18

(51) Int. Cl.⁵ : **A23C 9/12**

(21) Application number : **91108459.8**

(22) Date of filing : **24.05.91**

(54) **Process for producing skim milk powder of high galacto-oligosaccharide content.**

(30) Priority : **25.05.90 JP 136121/90**

(43) Date of publication of application :
**27.11.91 Bulletin 91/48**

(45) Publication of the grant of the patent :
**04.05.94 Bulletin 94/18**

(84) Designated Contracting States :
**DE FR NL**

(56) References cited :
**EP-A- 0 323 201**
**FR-A- 2 591 484**
**JP-A-62 138 147**
**US-A- 2 776 928**
**US-A- 2 826 503**

(73) Proprietor : **SNOW BRAND MILK PRODUCTS & CO., LTD.**
**1-1, Naebo-cho 6-chome Higashi-ku**
**Sapporo-shi Hokkaido 065 (JP)**

(72) Inventor : **Deya, Eiki**
**6-6-802, Irumagawa 1-chome**
**Sayama-shi, Saitama-ken (JP)**
Inventor : **Yanahira, Shuichi**
**3-15-103, Fujimi, Tsurugashima-machi**
**Iruma-gun, Saitama-ken (JP)**
Inventor : **Kobayashi, Tomoko**
**47-7, Konbacho, Ohmiya-shi**
**Saitama-ken (JP)**

(74) Representative : **Hering, Hartmut, Dipl.-Ing. et al**
**Patentanwälte Berendt, Leyh & Hering**
**Innere-Wiener-Strasse 20**
**D-81667 München (DE)**

## Description

Background of the Invention

The present invention relates to a process for producing a skim milk powder of high galacto-oligosaccharide content. This skim milk powder of high galacto-oligosaccharide content is useful as a physiologically active material for use in foods or livestock feeds.

Description of the Prior Art

It was found in recent years that galacto-oligosaccharide has bifidobacterium-proliferating activity to humans [Japanese Patent Application Kokai (Laid-Open) No. 104885/1980] and a weight-increasing activity to livestocks [Japanese Patent Application Kokai (Laid-Open) No. 138147/1987]. As a result, galacto-oligosaccharide came to be used in foods or livestock feeds.

Meanwhile, skim milk powder is in wide use in foods such as ice cream, margarine, yogurt, bread, cakes and the like, as well as in feeds for livestocks such as cattle, swine and the like.

Under such circumstances, there arised a strong desire of developing skim milk powder which contains galacto-oligosaccharide having the above-mentioned physiological activities, at a high concentration.

However, in producing galacto-oligosaccharide by reacting skim milk powder as the starting material with β-galactosidase according to the hitherto proposed process [Japanese Patent Application Kokai (Laid-Open) No. 104885/1980], the yield of galacto-oligosaccharide is low because the lactose concentration in skim milk powder (starting material) is low, i.e., about 5% by weight; as a result, it was impossible to obtain galacto-oligosaccharide contained in the skim milk powder at a concentration of 5% by weight or more.

The yield of galacto-oligosaccharide can be increased by concentrating skim milk powder to increase the lactose concentration and reacting the concentrated skim milk with β-galactosidase. However, this approach has a drawback in that when the reaction mixture after the reaction with β-galactosidase is heated to 90°C or higher to terminate the enzymatic reaction according to an ordinary method, the reaction mixture causes viscosity increase, significantly reducing the efficiency of the subsequent spray drying step.

For the above reasons, no further effort to develop skim milk powder of relatively high galacto-oligosaccharide content is under way currently.

However, further procedures for preparing a skim milk powder have been developed in the prior art. Thus, FR-A-2 591 484 describes a cattle feed containing galacto-oligosaccharides. A lactose containing material such as skim milk is treated with β-galactosidase, the activity of which is destroyed by means of raising the temperature to at least 90°C. As a result, a powder having a galacto-oligosaccharide content of 20 to 50 % is obtained.

US 2,826,503 deals with the conversion of lactose (in milk) to oligosaccharides. A milk product is concentrated to exhibit a lactose content of at least 15 wt%. Subsequently, lactase is added for incubation. The following heating (or heat-spraying) step at a temperature of at least 80°C is performed over a period of 30 minutes, thereby inactivating the enzyme.

From US 2,776,928 a similar process is known, whichs proceeds from a concentrated skim milk to which a lactase derived from yeast is added so as to hydrolyse the lactose to galactose and glucose. Inactivation of the enzyme is accomplished by a heating step at about 70°C for 30 minutes.

Finally, EP-A 0 323 201 describes a method for the production of processed milk comprising galacto-oligosaccharides. At least 15% of the lactose originally contained in the milk are converted into galacto-oligosaccharides, which conversion is catalyzed by a β-galactosidase from Streptococcus.

An object of the present invention is to provide a process for producing a skim milk powder of high galacto-oligosaccharide content economically, inexpensively and efficiently.

A further definite object of the present invention is to provide the process for producing the skim milk powder of high galacto-oligosaccharide content, which process can keep the viscosity increase of concentrated milk (starting material) occurring in its reaction with β-galactosidase, as low as possible to make easy the spray drying step of the reaction mixture.

The above objects of the present invention could be achieved by adding β-galactosidase to concentrated milk obtained by concentrating skim milk, to give rise to an enzymatic reaction; heating the reaction mixture to 70-85°C to terminate the enzymatic reaction; and then spray-drying the reaction mixture.

As a result, it became possible to obtain a skim milk powder containing a large amount, i.e., 5% by weight or more of galacto-oligosaccharide, obtained by a β-galactosidase treatment using skim milk as the raw material.

## Detailed Description of Preferred Embodiments

The present inventors made study in order to achieve the above objects. As a result, the present inventors found that when concentrated milk obtained by concentrating skim milk is reacted with β-galactosidase to form galacto-oligosaccharide, this enzymatic reaction can be completely terminated by heating the resulting reaction mixture to 70-85°C and that said reaction mixture gives rise to no viscosity increase at said temperature and accordingly the subsequent spray drying step undergoes no adverse effect by the viscosity increase, enabling the efficient production of a skim milk powder of high galacto-oligosaccharide content. The finding has led to the completion of the present invention.

Hence, the present invention relates to the process for producing a skim milk powder of high galacto-oligosaccharide content, which process comprises adding β-galactosidase to concentrated milk obtained by concentrating skim milk, to give rise to an enzymatic reaction; heating the resulting reaction mixture to 70-85°C to terminate the enzymatic reaction; and spray-drying the reaction-terminated mixture.

In detail:

Firstly skim milk is concentrated to prepare concentrated milk. In view of the subsequent treatment, the concentration is desirably effected to such an extent that the total solid content in the concentrated milk becomes 20-50% by weight.

To the concentrated milk is added β-galactosidase to give rise to an enzymatic reaction. It is desirable that β-galactosidase be added by 0.1-200 units/ml and the enzymatic reaction be conducted at a temperature of 20-50°C. The time of the enzymatic reaction has a large influence on the yield of galacto-oligosaccharide; therefore, it is necessary that an optimum reaction time be determined in advance. The optimum reaction time can preferably be determined by measuring the amount of galacto-oligosaccharide formed by the enzymatic reaction, by means of high performance liquid chromatography or the like.

Then, the reaction mixture is heated at 70-80°C for 30 seconds to 15 minutes to terminate the enzymatic reaction. The enzymatic reaction can be terminated also by heating the reaction mixture to a temperature of 90°C or higher which is ordinarily used for milk sterilization; however, such a high temperature invites significant increase in viscosity of reaction mixture which poses a problem in the subsequent spray drying step, and cannot be employed practically.

Table 1 shows the residual activity of β-galactosidase and the viscosity of concentrated skim milk (reaction mixture) at various heating conditions.

## Table 1

| | Residual activity (%) | Viscosity (cp) |
|---|---|---|
| Before heating | 100 | 50 |
| 65°C x 5 minutes | 70 | 70 |
| 70°C x 5 minutes | 0 | 100 |
| 80°C x 5 minutes | 0 | 1,000 |
| 85°C x 5 minutes | 0 | 1,500 |
| 90°C x 5 minutes | 0 | 10,000 |
| 100°C x 5 minutes | 0 | 20,000 |
| 120°C x 2 seconds | 0 | 12,000 |

As is clear from Table 1, β-galactosidease is completely deactivated at temperatures of 70°C and higher.

The reaction mixture has a significantly increased viscosity at temperatures of 90°C and higher. In the spray drying step, the drying efficiency is higher as the solution to be spray-dried has a lower viscosity. In general, it is practically impossible to convert a solution having a viscosity of 10,000 cp or higher, to fine particles. Therefore, in order to spray-dry a solution of high viscosity efficiently, it is necessary to add water to the solution to reduce the viscosity. However, water addition allows the resulting solution to have a reduced solid content and resultantly reduces the efficiency of spray drying.

In order to efficiently produce skim milk power containing galacto-oligosaccharide at a relatively high concentration as in the present invention, it is necessary to employ such heating conditions as the enzymatic activity is completely lost and yet the reaction mixture causes no significant viscosity increase. The present invention has found such heating conditions and is based on use of the conditions.

After the termination of the enzymatic reaction, the reaction mixture is subjected to spray drying under the same conditions as in ordinary spray drying for skim milk.

Thus, it is possible to obtain skim milk powder containing about 5-15% by weight of galacto-oligosaccharide such as galactosyl-lactose wherein one molecule of galactose is bonded to one molecule of lactose, digalactosyl-lactose wherein two molecules of galactose are bonded to one molecule of lactose, and trigalactosyl-lactose wherein three molecules of galactose are bonded to one molecule of lactose.

The galacto-oligosaccharide-containing skim milk powder obtained by the process of the present invention contains galacto-oligosaccharide at a high concentration, and accordingly is very useful as a food material having bifidobacterium-proliferating activity to humans, or as a feed material having a weight-increasing activity to livestocks.

The galacto-oligosaccharide-containing skim milk powder produced by the process of the present invention is inexpensive and efficient, and accordingly has a high value as the above-mentioned materials.

The present invention is hereinafter described in more detail by way of Example.

Example

45,000 kg of skim milk was sterilized at 115°C for 2 seconds, and then concentrated using a double-effect evaporator so that the concentrated skim milk had a total solid content of 43% by weight. To 9,500 kg of the resulting concentrated skim milk was added 1 kg of β-galactosidase (Sumilact LL manufactured by Shin Nihon Kogyo K.K.), and the resulting mixture was subjected to an enzymatic reaction at 40°C for 2 hours. The reaction mixture was heated at 85°C for 5 minutes using a plate type heat exchanger having a holding tube, to terminate the enzymatic reaction. The resulting reaction mixture was powderized using a vertical type spray dryer, to obtain 3,500 kg of skim milk powder containing galacto-oligosaccharide at a concentration of about 10% by weight.

The galacto-oligosaccharide-containing skim milk powder obtained above had the following composition.

| | |
|---|---|
| Galacto-oligosaccharide | 10.5% by weight |
| Lactose | 33.8% by weight |
| Monosaccharide | 9.0% by weight |
| Protein | 33.6% by weight |
| Fat | 0.8% by weight |
| Ash | 9.0% by weight |
| Water | 3.3% by weight |

The thus obtained skim milk powder can be used as a material for foods such as ice cream, margarine, yogurt, bread, cakes, etc., or as a feed material for livestocks such as cattle, swine and the like.

## Claims

1. A process for producing skim milk powder containing 10 - 15% by weight of galacto-oligosaccharide, which comprises the following steps (i) to (iv):

    (i) concentrating skim milk to obtain concentrated milk with a solid content of 20 - 50% by weight,
    (ii) adding β-galactosidase to the concentrated milk to give rise to an enzymatic reaction,
    (iii) heating the resulting reaction mixture 30 seconds to 15 minutes to a temperature of 70 - 85° C in order to terminate the enzymatic reaction, and
    (iv) spray-drying the reaction-terminated mixture.

2. The process according to claim 1, wherein the step (ii) β-galactosidase is added in an amount of 0,1 - 200 units/ml and the enzymatic reaction is conducted at a temperature of 20 - 50°C.

**Patentansprüche**

1. Verfahren zur Herstellung von Magermilchpulver, das 10 - 15 Gew.% Galakto-Oligosaccharide enthält, wobei das Verfahren die folgenden Schritte (i) bis (iv) umfaßt:
   (i) Magermilch zu konzentrieren, so daß eine konzentrierte Milch mit einem Gehalt an Feststoffen von 20 - 50 Gew.% erhalten wird,
   (ii) der konzentrierten Milch zur enzymatischen Umsetzung $\beta$-Galaktosidase zuzusetzen,
   (iii) das resultierende Reaktionsgemisch für 30 Sekunden bis 15 Minuten auf eine Temperatur von 70 - 85°C zu erhitzen, um die enzymatische Reaktion zu beenden, und
   (iv) das Reaktionsgemisch nach Beendigung der Reaktion zu sprühtrocknen.

2. Das Verfahren nach Anspruch 1, wobei in Schritt (ii) $\beta$-Galaktosidase in einer Menge von 0,1 - 200 Einheiten/ml zugesetzt wird, und die enzymatische Reaktion bei einer Temperatur von 20 - 50°C durchgeführt wird.

**Revendications**

1. Procédé pour produire du lait écrémé en poudre contenant 10 à 15% en poids de galacto-oligosaccharide, qui comprend les étapes suivantes (i) à (v) consistant:
   (i) à concentrer du lait écrémé pour obtenir du lait concentré avec une teneur en solides de 20 à 50% en poids,
   (ii) à ajouter de la $\beta$-galactosidase au lait concentré pour donner lieu à une réaction enzymatique,
   (iii) à chauffer le mélange réactionnel résultant de 30 secondes à 15 minutes à une température de 70 à 85°C afin de terminer la réaction enzymatique, et
   (iv) à sécher par pulvérisation le mélange dont la réaction est terminée.

2. Procédé selon la revendication 1, dans lequel on ajoute la $\beta$-galactosidase de l'étape (ii) en une quantité de 0,1 à 200 unités/ml et on conduit la réaction enzymatique à une température de 20 à 50°C.